# EUROPEAN PATENT APPLICATION

(11) **EP 4 518 010 A1**
(43) Date of publication of application: **05.03.2025**
(21) Application number: 24771160.9
(22) Date of filing: 12.03.2024
(51) Int. Cl.: H01M 50/566, H01M 50/552, H01M 50/15, H01M 50/503

(54) **TERMINAL STRUCTURE FOR SECONDARY BATTERY, AND SECONDARY BATTERY HAVING SAME**

(30) Priority: 14.03.2023 KR 20230032901
(71) Applicant: LG Energy Solution, Ltd., Seoul 07335 (KR)
(72) Inventor: BOK, Cheon Hee, Daejeon 34122 (KR); SUNG, Joo Hwan, Daejeon 34122 (KR)
(74) Representative: Goddar, Heinz J.
(86) International application number: PCT/KR2024/003140
(87) International publication number: WO 2024/191161

(57) **Abstract**

A terminal structure for a secondary battery having a conductive first member provided with a protruding part with a circular cross-section and a conductive second member provided with a through hole into which a protruding part of the first member is inserted is provided. A welding part is formed along a circular border in contact with the conductive first member and the conductive second member.

## Description

### CROSS-REFERENCE TO RELATED APPLICATIONS

This application is a 371 National Stage entry of PCT Application No. PCT/KR2024/003140 filed March 14, 2024, which claims the benefit of foreign priority to Korean Patent Application No. 10-2023-0032901, filed on March 14, 2023, the disclosures of which are incorporated by reference herein in their entirety.

### TECHNICAL FIELD

The present disclosure relates to a structure for electrically connecting an electrode assembly and an external terminal in a secondary battery.

### BACKGROUND

Unlike primary batteries, secondary batteries are rechargeable and can be miniaturized compared to their large capacity, which is why a lot of research has been conducted on secondary batteries in recent years. With the development of battery technology, the demand for mobile devices, and the rise of electric vehicles and energy storage systems (ESS), which are accompanied by a growing awareness of the need to protect the environment, the demand for secondary batteries as a power source is increasing.

Secondary batteries can be classified into coin-type, cylindrical, prismatic, and pouch-type batteries based on the shape of their battery cases. The electrode assembly mounted inside the battery case of a secondary battery is a rechargeable generator composed of electrodes and separators in a laminated structure.

The electrode assembly can be roughly categorized as jelly-roll type, where a separator is interposed between positive and negative electrodes of a sheet-type coated with active materials and wound, stack-type, where multiple positive and negative electrodes interposed with separators are sequentially stacked, and stack & folding type, where stack-type unit cells are wound with a long separating film.

The electrode assembly housed within the battery case is electrically connected internally to the externally exposed negative and positive terminals of the battery case. For example, the leads provided in the electrode assembly and the negative and positive terminals of the battery case may be interconnected by a busbar.

Here, laser welding is used to join the busbar to the negative and positive terminals, which has caused many problems, including terminal corrosion due to over-welding, thermal damage and corrosion due to spatter generated by over-welding, melting of the lead tape, melting of the separator in the electrode assembly, and low voltage due to poor welding.

### SUMMARY

### [Technical Problem]

The present disclosure aims to provide a terminal structure for a secondary battery that can solve a problem caused by over-welding when welding the electrode terminals of a busbar and a battery case.

However, the technical problems that the present disclosure aims to address are not limited to the aforementioned problem, and other undisclosed challenges may be clearly understood by those skilled in the art from the description of the disclosure provided below.

### [Technical Solution]

The present disclosure relates to a terminal structure for a secondary battery, which, in one example, includes: a conductive first member provided with a protruding part with a circular cross-section, and a conductive second member provided with a through hole into which a protruding part of the first member is inserted, wherein the protruding part of the first member is inserted into a through hole of the second member and a welding part is formed along a circular border in contact with each other.

The protruding part may be only partially inserted relative to the total depth of the through hole.

In an exemplary aspect of the present disclosure, the through hole may be provided with an annular step that limits or directs the insertion depth of the protruding part.

For example, the step may be a miniaturized step that limits the insertion depth of the protruding part.

Or, the step may be an extended step that directs the insertion depth of the protruding part.

And, the first member may be a terminal component provided on a cap plate covering a surface of the battery, and the second member may be a busbar electrically connected to the leads of the electrode assembly.

Meanwhile, as a secondary battery including the aforementioned terminal structure for a secondary battery, the present disclosure provides a secondary battery including: an electrode assembly having a plurality of battery cells gathered therein, and protruding with leads electrically connecting the plurality of battery cells; a battery case having at least one side open to receive the electrode assembly; a cap plate closing the open side of the battery case, and having positive and/or negative terminals; the first member, which is a conductive terminal component provided on the cap plate and electrically connected to the positive and/or negative terminals; and the second member, which is a busbar electrically connected to the leads of the electrode assembly.

In an exemplary aspect of the present disclosure, the battery case has an open upper surface, and the cap plate may be a top cap having positive and negative terminals.

In one example, the step is a miniaturized step that limits the insertion depth of the protruding part, and the welding part may be formed along an edge of the protruding part exposed about the miniaturized step.

In another example, the step may be an extended step that directs the insertion depth of the protruding part, and the welding part may be formed along a boundary of the extended step and the protruding part.

### [Advantageous Effects]

The terminal structure for a secondary battery of the present disclosure having the above configuration prevents the problem of over-welding caused by conventionally performing spot welding in the center of the first and second members by overlapping the first and second members by forming a welding part along a circular border where the protruding part of the first member is inserted into the through hole of the second member and is in contact with each other. In other words, by performing welding along the contact surface of the protruding part and the through hole, the welding quality is improved while over-welding is avoided by distributing the welding heat along the circular border.

Furthermore, in an aspect where the protruding part is inserted only partially for the entire depth of the through hole, welding is performed from the inside of the through hole, thereby reducing the possibility of spatter generated during welding being scattered toward the electrode assembly, thereby effectively protecting the electrode assembly, which is susceptible to damage by overheating, and thereby improving the quality of the secondary battery.

However, the technical effects of the present disclosure are not limited to those described above, and other effects not mentioned will be apparent to those of ordinary skill in the art from the description set forth below.

### BRIEF DESCRIPTION OF THE DRAWINGS

The following diagrams accompanying this specification illustrate preferred aspects of the present disclosure and, together with the detailed description that follows, serve to further illustrate the technical ideas of the present disclosure, and the present disclosure is not to be construed as limited to what is shown in such diagrams.
FIG. 1 is a diagram illustrating an example of a prismatic battery where the terminal structure for secondary batteries according to the present disclosure can be applied.
FIG. 2 is a diagram illustrating a structure where the first member and the second member are mutually welded.
FIG. 3 is a diagram illustrating another structure where the first member and the second member are mutually welded.
FIG. 4 is a diagram illustrating an aspect in which the second member is provided with a miniaturized step.
FIG. 5 is a diagram illustrating an aspect in which the second member is provided with an extended step.
FIG. 6 is a diagram illustrating an example of the terminal structure for a secondary battery of the present disclosure applied to the prismatic battery of FIG. 1.
FIG. 7 is a diagram illustrating one aspect of a cap plate provided in the prismatic battery of FIG. 6.
FIG. 8 is a diagram illustrating a structure in which a welding part is formed on the miniaturized step of FIG. 4.
FIG. 9 is a diagram illustrating a structure in which a welding part is formed on the extended step of FIG. 5.

### DETAILED DESCRIPTION

Reference characters used in the present disclosure are as follows:

### [Reference numerals]

10: FIRST MEMBER
12: PROTRUDING PART
20: SECOND MEMBER
22: THROUGH HOLE
24: STEP
24-1: MINIATURIZED STEP
24-2: EXTENDED STEP
30: WELDING PART
100: SECONDARY BATTERY
110: ELECTRODE ASSEMBLY
112: BATTERY CELL
114: LEAD
120: BATTERY CASE
130: CAP PLATE
130': TOP CAP
132: POSITIVE TERMINAL
134: NEGATIVE TERMINAL
140: TERMINAL COMPONENT
150: BUSBAR
The present disclosure may have various modifications and various examples, and specific examples are illustrated in the drawings and described in detail in the description.

However, it should be understood that the present disclosure is not limited to specific aspects, and includes all modifications, equivalents or alternatives within the spirit and technical scope of the present disclosure.

The terms "comprise," "include" and "have" are used herein to designate the presence of characteristics, numbers, steps, actions, components or members described in the specification or a combination thereof, and it should be understood that the possibility of the presence or addition of one or more other characteristics, numbers, steps, actions, components, members or a combination thereof is not excluded in advance.

In addition, when a part of a layer, a film, a region or a plate is disposed "on" another part, this includes not only a case in which one part is disposed "directly on" another part, but a case in which a third part is interposed there between. In contrast, when a part of a layer, a film, a region or a plate is disposed "under" another part, this includes not only a case in which one part is disposed "directly under" another part, but a case in which a third part is interposed there between. In addition, in this application, "on" may include not only a case of disposed on an upper part but also a case of disposed on a lower part.

The present disclosure relates to a terminal structure for a secondary battery, which, in one example, includes a conductive first member provided with a protruding part with a circular cross-section, and a conductive second member provided with a through hole into which a protruding part of the first member is inserted, wherein the protruding part of the first member is inserted into a through hole of the second member and a welding part is formed along a circular border in contact with each other.

Preferably, the protruding part may be inserted only partially for the entire depth of the through hole.

The terminal structure for a secondary battery of the present disclosure having the above configuration prevents the problem of over-welding caused by conventionally performing spot welding in the center of the first and second members by overlapping the first and second members by forming a welding part along a circular border where the protruding part of the first member is inserted into the through hole of the second member and is in contact with each other. In other words, by performing welding along the contact surface of the protruding part and the through hole, the welding quality is improved while over-welding is avoided by distributing the welding heat along the circular border.

Furthermore, in an aspect where the protruding part is inserted only partially for the entire depth of the through hole, welding is performed from the inside of the through hole, thereby reducing the possibility of spatter generated during welding being scattered toward the electrode assembly, thereby effectively protecting the electrode assembly, which is susceptible to damage by overheating, and thereby improving the quality of the secondary battery.

Hereinafter, a specific aspect of a terminal structure for a secondary battery according to the present disclosure will be described in detail with reference to the accompanying drawings. For reference, the directions of front to back, up and down, left and right, designating relative positions, used in the following description are for the purpose of understanding the disclosure and refer to the directions shown in the drawings unless otherwise defined.

### [First Aspect]

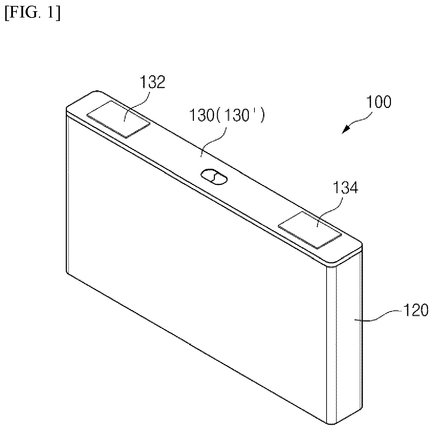

FIG. 1 is a diagram illustrating an example of a prismatic battery to which the terminal structure for a secondary battery according to the present disclosure (hereinafter referred to simply as the "terminal structure") may be applied. The prismatic battery shown in FIG. 1 is an exemplary aspect of a unidirectional battery, i.e., one in which the positive terminal 132 and the negative terminal 134 are disposed on the same side, in FIG. 1 on the upper surface of the battery case 120. The terminal structure for a secondary battery according to the present disclosure relates to the welding structure of the busbar 150 to the positive and/or negative terminals 132 and/or 134, and before describing the overall configuration of the exemplified prismatic battery, the terminal structure of the present disclosure, which can be applied to various forms of secondary battery 100, will be described in detail.

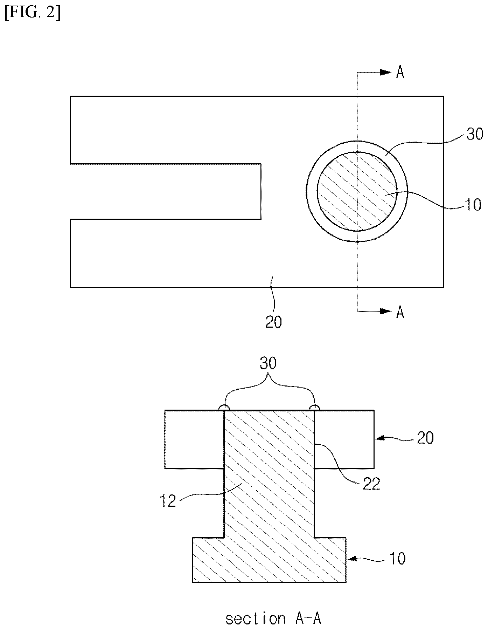

FIG. 2 is a diagram illustrating a structure in which a conductive first member 10 and a second member 20 are mutually welded. For example, the first member 10 may be a terminal component 140 provided on a cap plate 130 covering one side of a battery, and the second member 20 may be a busbar 150 electrically connected to leads 114 of the electrode assembly 110. Alternatively, the first member 10 may be the busbar 150 and vice versa. And, for electrical connection, both the first member 10 and the second member 20 are made of a conductive material.

The first member 10 is provided with a protruding part 12 having a circular cross-section, and the second member 20 is provided with a through hole 22 into which the protruding part 12 is inserted. Of course, the protruding part 12 and the through hole 22 may have other shapes than a circular cross-section, such as an elliptical or polygonal cross-section, but for ease of processing and welding, it will be preferred to make the protruding part 12 and the through hole 22 circular.

Referring to FIG. 2, the first member 10 has a protruding part 12 inserted into the through hole 22 of the second member 20, thereby creating a circular contact border. The welding part 30 formed by laser welding follows the circular border, whereby the first member 10 and the second member 20 are joined along a circumferential surface in contact with each other. The welding action occurs across the entire circumferential surface, ensuring a uniform weld quality and avoiding the problem of over-welding as excessive welding heat is not generated.

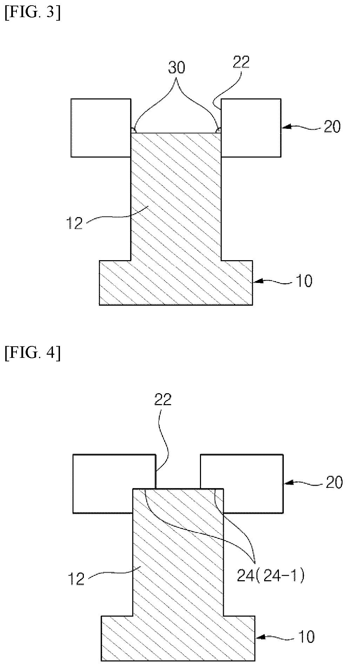

FIG. 3 is a diagram illustrating another structure in which the conductive first member 10 and the second member 20 are mutually welded. In the coupling of the first member 10 and the second member 20, the protruding part 12 is inserted only partially for the entire depth of the through hole 22, and the welding part 30 is formed annularly along the contact border of the first member 10 and the second member 20 on the inside of the through hole 22. By having the laser welding occur on the inside of the through hole 22, hot spatter from the welding process is less likely to be scattered into the surrounding area, and the problem of melting the lead tape or separator of the heat sensitive electrode assembly 110 is significantly reduced.

Furthermore, depending on the aspect of the disclosure, the through hole 22 may be provided with a step 24 that limits the insertion depth of the protruding part 12. Depending on the shape of the step 24, the step 24 may physically limit the insertion depth of the protruding part 12, or may function to direct how far the protruding part 12 may be inserted. Through the configuration of the step 24, it is ensured that the protruding part 12 is only partially inserted for the full depth of the through hole 22.

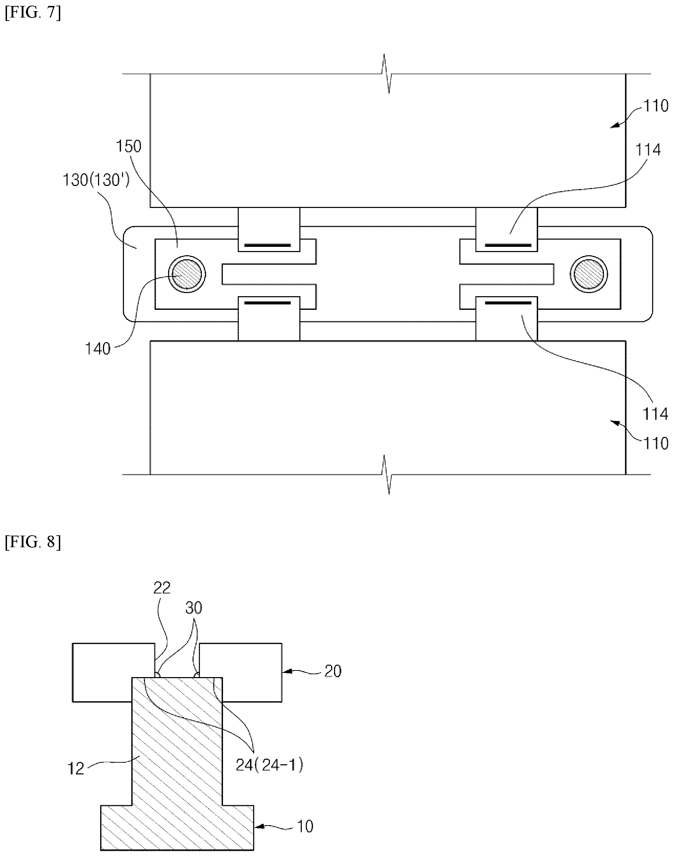

FIG. 4 illustrates the configuration of the miniaturized step 24-1 that physically limits the insertion depth of the protruding part 12. The miniaturized step 24-1 is formed in the form of a sharp decrease in diameter halfway through the insertion direction of the protruding part 12 into the through hole 22, limiting the insertion depth of the protruding part 12 blocked by the miniaturized step 24-1. FIG. 8 is a diagram illustrating a structure in which a welding part 30 is formed on the miniaturized step 24-1 of FIG. 4. As shown in FIG. 8, the welding part 30 may be formed along an edge of the protruding part 12 exposed about the miniaturized step 24-1.

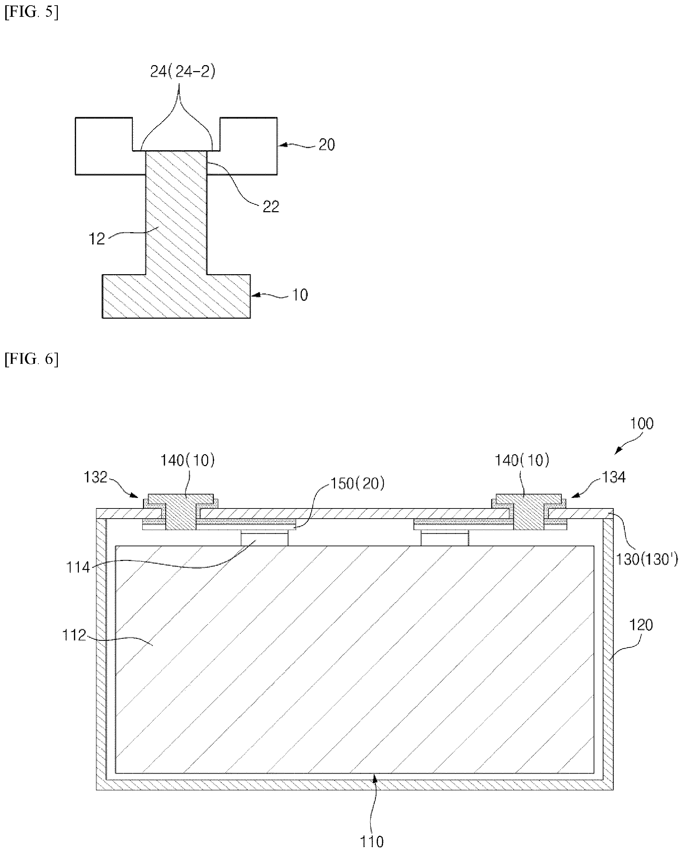

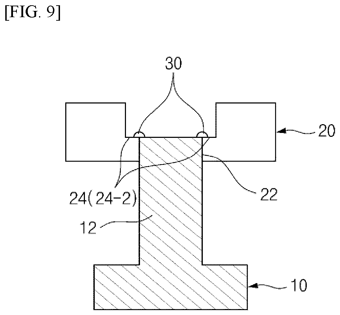

FIG. 5 illustrates the configuration of the extended step 24-2 that directs the insertion depth of the protruding part 12. As opposed to the miniaturized step 24-1 of FIG. 4, the extended step 24-2 of FIG. 5 is formed such that the extended step 24-2 has a sharp increase in diameter about halfway through the direction in which the protruding part 12 is inserted into the through hole 22. While the extended step 24-2 does not physically limit the insertion depth of the protruding part 12, it indirectly defines the insertion depth by visually directing insertion to a point where the surfaces of the extended step 24-2 and the protruding part 12 coincide. While the extended step 24-2 is less effective than the miniaturized step 24-1 in terms of limiting the insertion depth, it is advantageous in terms of welding quality and productivity because it allows sufficient welding space. In the case of the extended step 24-2, which directs the insertion depth of the protruding part 12, the welding part 30 may be formed along the interface of the extended step 24-2 and the protruding part 12, as shown in FIG. 9.

By the terminal structure of FIGS. 8 and 9, the welding part 30 is formed annularly along the contact border of the first member 10 and the second member 20 on the inside of the through hole 22. By performing the laser welding from the inside of the through hole 22, the scattering of hot spatter generated during the welding process to the surrounding area is reduced, thereby eliminating the problem of melting the lead tape or separator of the heat-sensitive electrode assembly 110.

### [Second Aspect]

In a second aspect of the present disclosure, an exemplary aspect in which the terminal structure described in the first aspect is applied to a secondary battery 100 is described. FIG. 6 is a diagram illustrating an example of the terminal structure for a secondary battery of the present disclosure applied to a prismatic battery, a form of the secondary battery 100 of FIG. 1. In the aspect of FIG. 6, the first member 10 is a conductive terminal component 140 provided on a cap plate 130 covering one side of the battery, and the second member 20 corresponds to a busbar 150 electrically connected to leads 114 of the electrode assembly 110.

The prismatic battery of FIG. 6 includes an electrode assembly 110 having a plurality of battery cells 112 and leads 114 protruding therefrom that electrically connect them, a battery case 120 having at least one side open to receive the electrode assembly 110, and a cap plate 130 closing the open side of the battery case 120. The cap plate 130 may be provided with positive and/or negative terminals 132 and/or 134. The prismatic battery shown is a unidirectional battery, wherein the battery case 120 has an open side, and the cap plate 130 closing the open side includes a top cap 130' having positive and negative terminals 132, 134. Although not shown, in the case of a bi-directional battery with positive 132 and negative 134 terminals respectively disposed on each side of the prismatic battery, each cap plate would be provided with either positive or negative terminals 132 or 134 as a side cap.

Here, a first member 10, which is a conductive terminal component 140, is provided on the cap plate 130 for electrical connection with the positive and/or negative terminals 132 and/or 134, and a second member 20, which is a busbar 150, electrically connects the first member 10 with the leads 114 of the electrode assembly 110. For example, as shown in FIG. 7, if a prismatic battery is configured with electrode assemblies 110 arranged and connected one on either side of a single cap plate 130 (also known as a butterfly structure due to its symmetrical shape), the leads 114 of both electrode assemblies 110 are arranged to have the same polarity as each other, and the paired leads 114 are joined to the busbar 150, which is the second member 20, by ultrasonic welding or the like, and each busbar 150 is joined to the first member 10 by laser welding or the like as a terminal structure in the first aspect.

The present disclosure has been described in more detail above with reference to the drawings and aspects. However, it is to be understood that the configurations shown in the drawings or aspects described herein are only one aspect of the disclosure and do not represent all of the technical ideas of the present disclosure, and that there may be various equivalents and modifications that may replace them at the time of filing the present disclosure.

## Claims

1. A terminal structure for a secondary battery, comprising:
a conductive first member provided with a protruding part with a circular cross-section, and
a conductive second member provided with a through hole into which the protruding part of the conductive first member is inserted, wherein
a welding part is formed along a circular border in contact with each of the conductive first member and the conductive second member.

2. The terminal structure for a secondary battery of claim 1, wherein
the protruding part is inserted to an insertion depth that is only partially inserted relative to the total depth of the through hole.

3. The terminal structure for a secondary battery of claim 2, wherein
the through hole is provided with an annular step that limits or directs the insertion depth of the protruding part.

4. The terminal structure for a secondary battery of claim 3, wherein
the step is a miniaturized step that limits the insertion depth of the protruding part.

5. The terminal structure for a secondary battery of claim 3, wherein
the step is an extended step that directs the insertion depth of the protruding part.

6. The terminal structure for a secondary battery of claim 1, wherein
the conductive first member is a terminal component configured to be provided on a cap plate covering a surface of the secondary battery, and
the conductive second member is a busbar configured to be electrically connected to leads of an electrode assembly.

7. A secondary battery comprising a terminal structure for a secondary battery according to claim 1, comprising:
an electrode assembly having a plurality of battery cells gathered therein, and protruding with leads electrically connecting the plurality of battery cells;
a battery case having at least one side open to receive the electrode assembly;
a cap plate closing the open side of the battery case, and having positive and/or negative terminals;
at least one conductive first member, which is a conductive terminal component provided on the cap plate and electrically connected to the positive and/or negative terminals; and
at least one conductive second member, which is a busbar electrically connected to leads of the electrode assembly.

8. The secondary battery of claim 7, wherein
the battery case has an open upper surface, and
the cap plate is a top cap having positive and negative terminals.

9. The secondary battery of claim 7, wherein the through hole of the at least one conductive second member is provided with a miniaturized step that limits the insertion depth of the protruding part, and
the welding part is formed along an edge of the protruding part exposed about the miniaturized step.

10. The secondary battery of claim 7, wherein the through hole of the at least one conductive second member is provided with an extended step that directs the insertion depth of the protruding part, and
the welding part is formed along a boundary of the extended step and the protruding part.
